# EUROPEAN PATENT APPLICATION

(11) **EP 4 586 527 A1**
(43) Date of publication of application: **16.07.2025**
(21) Application number: 24166694.0
(22) Date of filing: 27.03.2024
(51) Int. Cl.: H04L 1/1607

(54) **SYSTEM AND METHOD FOR TRANSMITTING PACKET BASED ON STATUS REPORT**

(30) Priority: 15.01.2024 TW 113101519
(71) Applicant: Industrial Technology Research Institute, 310401 Hsinchu (TW)
(72) Inventor: Liu, Weichun, 264 Yuanshan Township, Yilan County (TW); Chiang, Chi-Tao, 103 Taipei City (TW); Huang, Jen-Feng, 804 Kaohsiung City (TW)
(74) Representative: Kurig, Thomas

(57) **Abstract**

A system (100) and a method for transmitting a packet based on a status report are provided. The method includes the following steps: receiving, by a transmitting-end-device (110), a first status report from a receiving-end-device (120), wherein the first status report includes a first acknowledgment sequence number; receiving, by the transmitting-end-device (110), a second status report from the receiving-end-device (120), wherein the second status report includes a second acknowledgment sequence number; and when the transmitting-end-device (110) determines that the second acknowledgment sequence number is not greater than the first acknowledgment sequence number, transmitting, by the transmitting-end-device (110), a packet corresponding to the second acknowledgment sequence number to the receiving-end-device (120).

## Description

### TECHNICAL FIELD

The disclosure relates to a system and a method for transmitting a packet based on a status report.

### BACKGROUND

In the technical field of wireless communication, if the transmitting-end-device and the receiving-end-device are in the acknowledged mode (AM) of radio link control (RLC), the receiving-end-device may let the transmitting-end-device know which sequence number packets the receiving-end-device successfully received using the status report, and the receiving-end-device may let the transmitting-end-device know which sequence number packets the receiving-end-device did not successfully receive using the status report.

However, when the transmission bandwidth between the receiving-end-device and the transmitting-end-device is insufficient, the receiving-end-device is unable to send a complete status report to the transmitting-end-device, resulting in the wireless communication performance between the transmitting-end-device and the receiving-end-device decreased.

### SUMMARY

The disclosure provides a system and a method for transmitting a packet based on a status report that may improve the performance of wireless communication between a transmitting-end-device and a receiving-end-device.

A system for transmitting a packet based on a status report of the disclosure includes a transmitting-end-device and a receiving-end-device. The receiving-end-device is communicatively connected to the transmitting-end-device, wherein the transmitting-end-device receives a first status report from the receiving-end-device, wherein the first status report includes a first acknowledgment sequence number; the transmitting-end-device receives a second status report from the receiving-end-device, wherein the second status report includes a second acknowledgment sequence number; when the transmitting-end-device determines that the second acknowledgment sequence number is not greater than the first acknowledgment sequence number, the transmitting-end-device transmits a packet corresponding to the second acknowledgment sequence number to the receiving-end-device.

A method for transmitting a packet based on a status report of the disclosure includes the following steps: receiving, by a transmitting-end-device, a first status report from a receiving-end-device, wherein the first status report includes a first acknowledgment sequence number; receiving, by the transmitting-end-device, a second status report from the receiving-end-device, wherein the second status report includes a second acknowledgment sequence number; and transmitting, by the transmitting-end-device, a packet corresponding to the second acknowledgment sequence number to the receiving-end-device when the transmitting-end-device determines that the second acknowledgment sequence number is not greater than the first acknowledgment sequence number.

Based on the above, in the system and the method for transmitting a packet based on a status report of the disclosure, after the transmitting-end-device determines that the second acknowledgement sequence number (in the second status report) is not greater than the first acknowledgement sequence number (in the first status report), the transmitting-end-device transmits the packet corresponding to the second acknowledgement sequence number to the receiving-end-device. Accordingly, the performance of wireless communication between the transmitting-end-device and the receiving-end-device may be improved.

### BRIEF DESCRIPTION OF THE DRAWINGS

FIG. 1 is a schematic diagram of a system for transmitting a packet based on a status report according to an embodiment of the disclosure.
FIG. 2 is a flowchart of a method for transmitting a packet based on a status report according to an embodiment of the disclosure.
FIG. 3A to FIG. 3C are one operating example of the system shown in FIG. 1.
FIG. 4A to FIG. 4C are another operating example of the system shown in FIG. 1.

### DETAILED DESCRIPTION OF DISCLOSED EMBODIMENTS

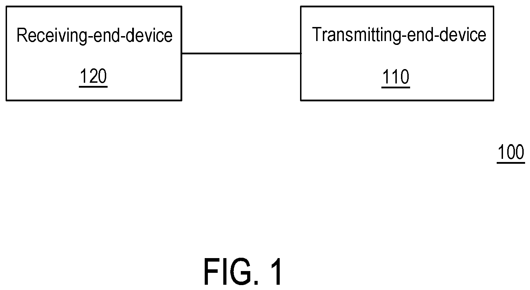

FIG. 1 is a schematic diagram of a system 100 for transmitting a packet based on a status report according to an embodiment of the disclosure. Please refer to FIG. 1. The system 100 may include a transmitting-end-device 110 and a receiving-end-device 120. The receiving-end-device 120 is communicatively connected to the transmitting-end-device 110. In the present embodiment, the transmitting-end-device 110 and the receiving-end-device 120 may include members such as a communication device (not shown in the figures), a storage device (not shown in the figures), and a processing device (not shown in the figures).

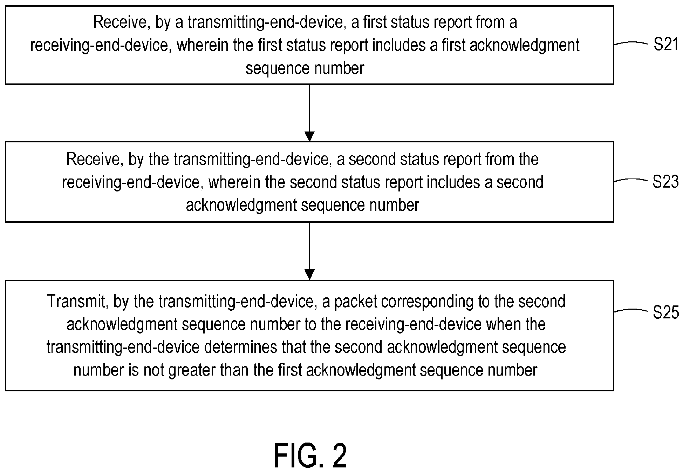

FIG. 2 is a flowchart of a method for transmitting a packet based on a status report according to an embodiment of the disclosure, wherein the method may be implemented by the system 100 shown in FIG. 1. Please refer to FIG. 1 and FIG. 2 at the same time.

In step S21, the transmitting-end-device 110 may receive a first status report from the receiving-end-device 120, wherein the first status report may include a first acknowledgement sequence number (ACK_SN).

In step S23, the transmitting-end-device 110 may receive a second status report from the receiving-end-device 120, wherein the second status report may include a second acknowledgement sequence number.

In step S25, when the transmitting-end-device 110 determines that the second acknowledgment sequence number is not greater than the first acknowledgment sequence number, the transmitting-end-device 110 may transmit a packet corresponding to the second acknowledgment sequence number to the receiving-end-device 120.

In an embodiment, when the second acknowledgement sequence number is not greater than the first acknowledgement sequence number, the receiving-end-device 120 and the transmitting-end-device 110 may execute a radio link control (RLC) reestablishment process. In detail, the receiving-end-device 120 may initiate the RLC reestablishment process. Or, the transmitting-end-device 110 may initiate the RLC reestablishment process.

The operation example of the system 100 shown in FIG. 1 is described below with an embodiment.

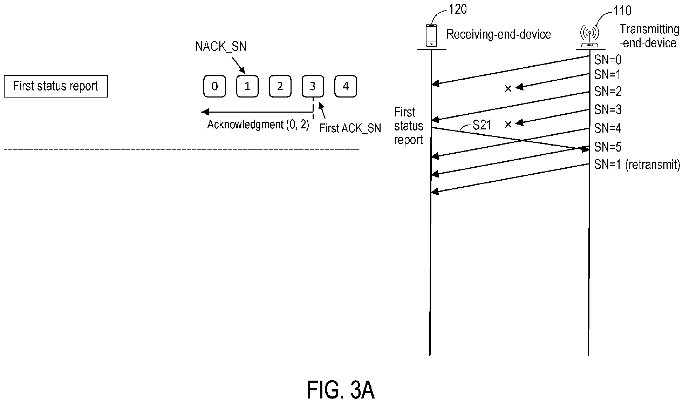

FIG. 3A to FIG. 3C are one operating example of the system 100 shown in FIG. 1. Please refer to FIG. 1, FIG. 2, and FIG. 3A to FIG. 3C at the same time. As shown in FIG. 3A, the transmitting-end-device 110 may sequentially transmit packets corresponding to different/consecutive sequence numbers (SN) to the receiving-end-device 120. In the present embodiment, the packet corresponding to sequence number 0 and the packet corresponding to sequence number 2 are successfully received by the receiving-end-device 120. Moreover, the packet corresponding to sequence number 1 and the packet corresponding to sequence number 3 are not successfully received by the receiving-end-device 120.

Please refer further to FIG. 3A. In step S21, the transmitting-end-device 110 may receive a first status report from the receiving-end-device 120, wherein the first status report may include a first acknowledgement sequence number "3". In more detail, in the present embodiment, the first status report may include a first acknowledgement sequence number "3" and a negative acknowledgement sequence number (NACK_SN) "1". Based on the first status report, the transmitting-end-device 110 may know that the receiving-end-device 120 successfully received the packet corresponding to sequence number 0 and the packet corresponding to sequence number 2, and the transmitting-end-device 110 may know that the receiving-end-device 120 did not successfully receive the packet corresponding to sequence number 1. Therefore, as shown in FIG. 3A, the transmitting-end-device 110 may retransmit the packet corresponding to sequence number 1 to the receiving-end-device 120.

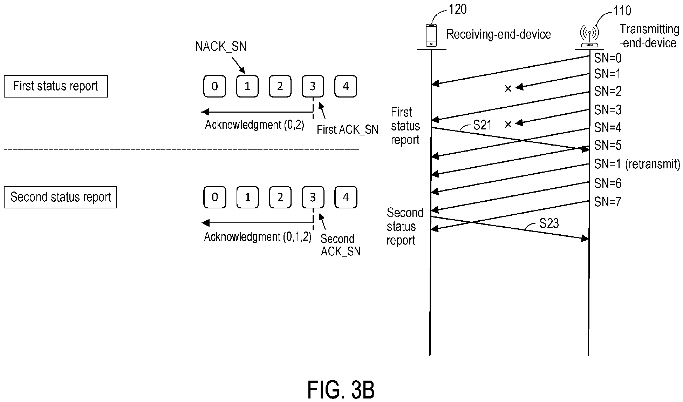

Please refer further to FIG. 3B. In step S23, the transmitting-end-device 110 may receive a second status report from the receiving-end-device 120, wherein the second status report may include a second acknowledgement sequence number "3". Specifically, as shown in FIG. 3B, the receiving-end-device 120 successfully received the packet corresponding to sequence number 4, the packet corresponding to sequence number 5, the (retransmitted) packet corresponding to sequence number 1, the packet corresponding to sequence number 6, and the packet corresponding to sequence number 7, and the receiving-end-device 120 did not successfully receive the packet corresponding to sequence number 3. However, due to insufficient transmission bandwidth between the receiving-end-device 120 and the transmitting-end-device 110, the second status report may include the second acknowledgement sequence number "3". Based on the second status report, the transmitting-end-device 110 may know that the receiving-end-device 120 successfully received the packet corresponding to sequence number 0, the packet corresponding to sequence number 1, and the packet corresponding to sequence number 2. In other words, the transmitting-end-device 110 may not know whether the receiving-end-device 120 successfully received the packet corresponding to sequence number 3 based on the second status report.

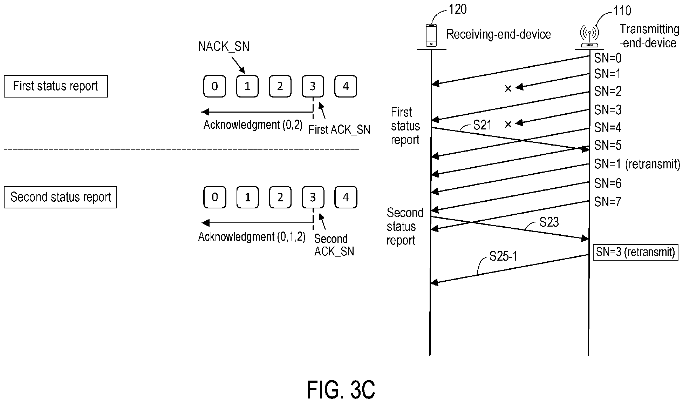

Please refer further to FIG. 3C. In step S25-1, when the transmitting-end-device 110 determines that the second acknowledgment sequence number "3" is equal to the first acknowledgment sequence number "3", the transmitting-end-device 110 may transmit a packet corresponding to the second acknowledgment sequence number "3" to the receiving-end-device 120. In other words, since the transmitting-end-device 110 may not know whether the receiving-end-device 120 successfully received the packet corresponding to sequence number 3 in step S23 of FIG. 3B, the transmitting-end-device 110 may transmit the packet corresponding to sequence number 3 to the receiving-end-device 120 in step S25-1.

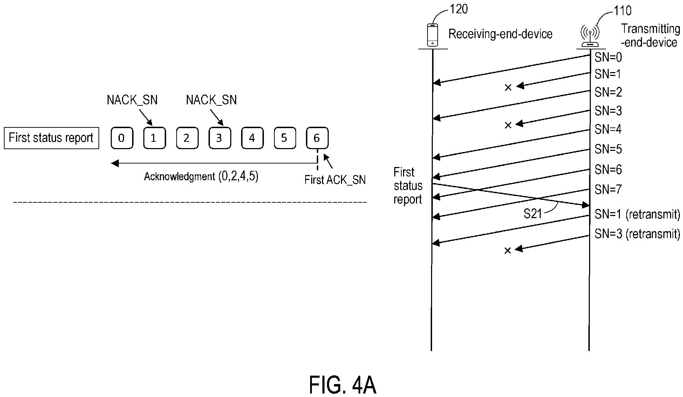

FIG. 4A to FIG. 4C are another operating example of the system 100 shown in FIG. 1. Please refer to FIG. 1, FIG. 2, and FIG. 4A to FIG. 4C at the same time. As shown in FIG. 4A, the transmitting-end-device 110 may sequentially transmit packets corresponding to different/consecutive sequence numbers to the receiving-end-device 120. In the present embodiment, the packet corresponding to sequence number 0, the packet corresponding to sequence number 2, the packet corresponding to sequence number 4, and the packet corresponding to sequence number 5 are successfully received by the receiving-end-device 120. Moreover, the packet corresponding to sequence number 1 and the packet corresponding to sequence number 3 are not successfully received by the receiving-end-device 120.

Please refer further to FIG. 4A. In step S21, the transmitting-end-device 110 may receive a first status report from the receiving-end-device 120, wherein the first status report may include a first acknowledgement sequence number "6". In more detail, in the present embodiment, the first status report may include a first acknowledgement sequence number "6", a negative acknowledgement sequence number "1", and a negative acknowledgement sequence number "3". Based on the first status report, the transmitting-end-device 110 may know that the receiving-end-device 120 successfully received the packet corresponding to sequence number 0, the packet corresponding to sequence number 2, the packet corresponding to sequence number 4, and the packet corresponding to sequence number 5, and the transmitting-end-device 110 may know that the receiving-end-device 120 did not successfully receive the packet corresponding to sequence number 1 and the packet corresponding to sequence number 3. Therefore, as shown in FIG. 4A, the transmitting-end-device 110 may retransmit the packet corresponding to sequence number 1 and the packet corresponding to sequence number 3 to the receiving-end-device 120.

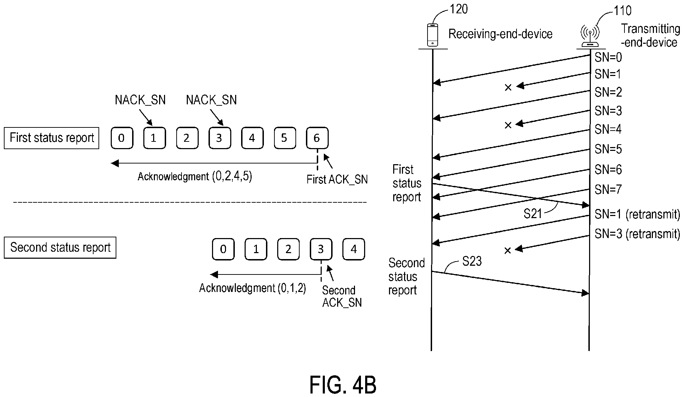

Please refer further to FIG. 4B. In step S23, the transmitting-end-device 110 may receive a second status report from the receiving-end-device 120, wherein the second status report may include a second acknowledgement sequence number "3". Specifically, as shown in FIG. 4B , the receiving-end-device 120 successfully received the packet corresponding to sequence number 6, the packet corresponding to sequence number 7, and the (retransmitted) packet corresponding to sequence number 1, and the receiving-end-device 120 did not successfully receive the (retransmitted) packet corresponding to sequence number 3. However, due to insufficient transmission bandwidth between the receiving-end-device 120 and the transmitting-end-device 110, the second status report may include the second acknowledgement sequence number "3". Based on the second status report, the transmitting-end-device 110 may know that the receiving-end-device 120 successfully received the packet corresponding to sequence number 0, the packet corresponding to sequence number 1, and the packet corresponding to sequence number 2. In other words, the transmitting-end-device 110 may not know whether the receiving-end-device 120 successfully received the packet corresponding to sequence number 3 based on the second status report.

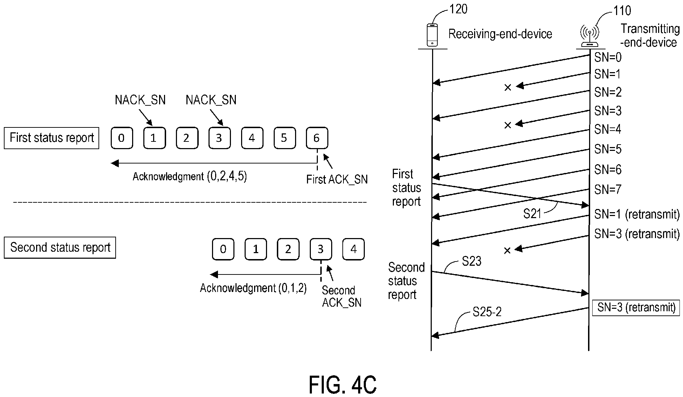

Please refer further to FIG. 4C. In step S25-2, when the transmitting-end-device 110 determines that the second acknowledgment sequence number "3" is less than the first acknowledgment sequence number "6", the transmitting-end-device 110 may transmit a packet corresponding to the second acknowledgment sequence number "3" to the receiving-end-device 120. In other words, since the transmitting-end-device 110 may not know whether the receiving-end-device 120 successfully received the packet corresponding to sequence number 3 in step S23 of FIG. 4B, the transmitting-end-device 110 may transmit the packet corresponding to sequence number 3 to the receiving-end-device 120 in step S25-2.

More specifically, when the transmitting-end-device 110 determines that the second acknowledgement sequence number is less than the first acknowledgement sequence number, the transmitting-end-device 110 may determine whether to transmit the packet corresponding to a transmittable sequence number to the receiving-end-device 120 using a probabilistic approach, wherein the transmittable sequence number is greater than the second acknowledgement sequence number and less than or equal to the first acknowledgement sequence number, and the second status report does not include a negative acknowledgement sequence number corresponding to the transmittable sequence number. Specifically, in the example of FIG. 4C, since the second acknowledgement sequence number "3" is less than the first acknowledgement sequence number "6", the transmittable sequence numbers may include "4", "5", and "6" (i.e., greater than the second acknowledgement sequence number "3" and less than or equal to the first acknowledgement sequence number "6"). More specifically, since the second status report does not include a negative acknowledgement sequence number corresponding to sequence number 4, the transmitting-end-device 110 may determine whether to transmit the packet corresponding to sequence number 4 to the receiving-end-device 120 using a probabilistic approach. Similarly, since the second status report does not include a negative acknowledgement sequence number corresponding to sequence number 5, the transmitting-end-device 110 may determine whether to transmit the packet corresponding to sequence number 5 to the receiving-end-device 120 using a probabilistic approach. Similarly, since the second status report does not include a negative acknowledgement sequence number corresponding to sequence number 6, the transmitting-end-device 110 may determine whether to transmit the packet corresponding to sequence number 6 to the receiving-end-device 120 using a probabilistic approach.

It is worth mentioning here that the maximum length of the sequence number in the above embodiments may comply with the specifications of wireless link control in the technical field of wireless communication.

Based on the above, in the system and the method for transmitting a packet based on a status report of the disclosure, after the transmitting-end-device determines that the second acknowledgement sequence number (in the second status report) is not greater than the first acknowledgement sequence number (in the first status report), the transmitting-end-device transmits the packet corresponding to the second acknowledgement sequence number to the receiving-end-device. Accordingly, the performance of wireless communication between the transmitting-end-device and the receiving-end-device may be improved.

## Claims

1. A system (100) for transmitting a packet based on a status report, comprising:
a transmitting-end-device (110); and
a receiving-end-device (120) communicatively connected to the transmitting-end-device (110), wherein
the transmitting-end-device (110) receives a first status report from the receiving-end-device (120), wherein the first status report comprises a first acknowledgement sequence number;
the transmitting-end-device (110) receives a second status report from the receiving-end-device (120), wherein the second status report comprises a second acknowledgement sequence number;
when the transmitting-end-device (110) determines that the second acknowledgment sequence number is not greater than the first acknowledgment sequence number, the transmitting-end-device (110) transmits a packet corresponding to the second acknowledgment sequence number to the receiving-end-device (120).

2. The system (100) of claim 1, wherein
when the second acknowledgement sequence number is not greater than the first acknowledgement sequence number, the receiving-end-device (120) and the transmitting-end-device (110) execute a radio link control reestablishment process.

3. The system (100) of claim 1, wherein
when the transmitting-end-device (110) determines that the second acknowledgment sequence number is equal to the first acknowledgment sequence number, the transmitting-end-device (110) transmits the packet corresponding to the second acknowledgment sequence number to the receiving-end-device (120).

4. The system (100) of claim 1, wherein
when the transmitting-end-device (110) determines that the second acknowledgment sequence number is less than the first acknowledgment sequence number, the transmitting-end-device (110) transmits the packet corresponding to the second acknowledgment sequence number to the receiving-end-device (120).

5. The system (100) of claim 4, wherein
when the transmitting-end-device (110) determines that the second acknowledgement sequence number is less than the first acknowledgement sequence number, the transmitting-end-device (110) determines whether to transmit the packet corresponding to a transmittable sequence number to the receiving-end-device (120) using a probabilistic approach, wherein the transmittable sequence number is greater than the second acknowledgement sequence number and less than or equal to the first acknowledgement sequence number, and the second status report does not comprise a negative acknowledgement sequence number corresponding to the transmittable sequence number.

6. A method for transmitting a packet based on a status report, suitable for a system (100) comprising a transmitting-end-device (110) and a receiving-end-device (120), wherein the method comprises the following steps:
receiving, by the transmitting-end-device (110), a first status report from the receiving-end-device (120), wherein the first status report comprises a first acknowledgement sequence number;
receiving, by the transmitting-end-device (110), a second status report from the receiving-end-device (120), wherein the second status report comprises a second acknowledgement sequence number; and
transmitting, by the transmitting-end-device (110), a packet corresponding to the second acknowledgment sequence number to the receiving-end-device (120) when the transmitting-end-device (110) determines that the second acknowledgment sequence number is not greater than the first acknowledgment sequence number.

7. The method of claim 6, further comprising:
executing, by the receiving-end-device (120) and the transmitting-end-device (110), a radio link control reestablishment process when the second acknowledgement sequence number is not greater than the first acknowledgement sequence number.

8. The method of claim 6, wherein the step of transmitting, by the transmitting-end-device (110), the packet corresponding to the second acknowledgment sequence number to the receiving-end-device (120) when the transmitting-end-device (110) determines that the second acknowledgment sequence number is not greater than the first acknowledgment sequence number comprises:
transmitting, by the transmitting-end-device (110), the packet corresponding to the second acknowledgment sequence number to the receiving-end-device (120) when the transmitting-end-device (110) determines that the second acknowledgment sequence number is equal to the first acknowledgment sequence number.

9. The method of claim 6, wherein the step of transmitting, by the transmitting-end-device (110), the packet corresponding to the second acknowledgment sequence number to the receiving-end-device (120) when the transmitting-end-device (110) determines that the second acknowledgment sequence number is not greater than the first acknowledgment sequence number comprises:
transmitting, by the transmitting-end-device (110), the packet corresponding to the second acknowledgment sequence number to the receiving-end-device (120) when the transmitting-end-device (110) determines that the second acknowledgment sequence number is less than the first acknowledgment sequence number.

10. The method of claim 9, further comprising:
determining, by the transmitting-end-device (110), whether to transmit the packet corresponding to the transmittable sequence number to the receiving-end-device (120) using a probabilistic approach when the transmitting-end-device (110) determines that the second acknowledgement sequence number is less than the first acknowledgement sequence number, wherein the transmittable sequence number is greater than the second acknowledgement sequence number and less than or equal to the first acknowledgement sequence number, and the second status report does not comprise a negative acknowledgement sequence number corresponding to the transmittable sequence number.

## Amended claims

### Amended claims in accordance with Rule 137(2) EPC.

1. A system (100) for transmitting a packet based on a status report, comprising:
a transmitting-end-device (110); and
a receiving-end-device (120) communicatively connected to the transmitting-end-device (110), wherein
the transmitting-end-device (110) receives a first status report from the receiving-end-device (120), wherein the first status report comprises a first acknowledgement sequence number, ACK_SN;
the transmitting-end-device (110) receives a second status report from the receiving-end-device (120), wherein the second status report comprises a second ACK_SN;
when the transmitting-end-device (110) determines that the second acknowledgment sequence number is less than the first acknowledgment sequence number, the transmitting-end-device (110) transmits a packet corresponding to the second acknowledgment sequence number to the receiving-end-device (120).

2. The system (100) of claim 1, wherein
when the second ACK_SN is not greater than the first ACK_SN, the receiving-end-device (120) and the transmitting-end-device (110) execute a radio link control reestablishment process.

3. The system (100) of claim 1, wherein
when the transmitting-end-device (110) determines that the second ACK_SN is less than the first ACK_SN, the transmitting-end-device (110) determines whether to transmit the packet corresponding to a transmittable sequence number to the receiving-end-device (120) using a probabilistic approach, wherein the transmittable sequence number is greater than the second ACK_SN and less than or equal to the first ACK_SN, and the second status report does not comprise a negative acknowledgement sequence number, NACK_SN, corresponding to the transmittable sequence number.

4. A method for transmitting a packet based on a status report, suitable for a system (100) comprising a transmitting-end-device (110) and a receiving-end-device (120), wherein the transmitting-end-device (110) and the receiving-end-device (120) are in acknowledged mode (AM) of radio link control (RLC), wherein the method comprises the following steps:
receiving, by the transmitting-end-device (110), a first status report from the receiving-end-device (120), wherein the first status report comprises a first acknowledgement sequence number, ACK_SN;
receiving, by the transmitting-end-device (110), a second status report from the receiving-end-device (120), wherein the second status report comprises a second ACK_SN; and
transmitting, by the transmitting-end-device (110), a packet corresponding to the second acknowledgment sequence number to the receiving-end-device (120) when the transmitting-end-device (110) determines that the second acknowledgment sequence number is less than the first acknowledgment sequence number.

5. The method of claim 4, further comprising:
executing, by the receiving-end-device (120) and the transmitting-end-device (110), a radio link control reestablishment process when the second ACK_SN is not greater than the first ACK_SN.

6. The method of claim 4, further comprising:
determining, by the transmitting-end-device (110), whether to transmit the packet corresponding to the transmittable sequence number to the receiving-end-device (120) using a probabilistic approach when the transmitting-end-device (110) determines that the second ACK_SN is less than the first ACK_SN, wherein the transmittable sequence number is greater than the second ACK_SN and less than or equal to the first ACK_SN, and the second status report does not comprise a negative acknowledgement sequence number, NACK_SN, corresponding to the transmittable sequence number.
